(19) **Europäisches Patentamt / European Patent Office / Office européen des brevets**

(11) **EP 3 787 245 B1**

(12) **EUROPEAN PATENT SPECIFICATION**

(45) Date of publication and mention
of the grant of the patent:
**30.08.2023  Bulletin 2023/35**

(21) Application number: **20185670.5**

(22) Date of filing: **02.06.2017**

(51) International Patent Classification (IPC):
**H04L 65/80** (2022.01)    **H04L 41/0677** (2022.01)
**H04L 43/0829** (2022.01)    **H04L 43/0864** (2022.01)
**H04L 43/0888** (2022.01)

(52) Cooperative Patent Classification (CPC):
**H04L 41/0677; H04L 43/0864; H04L 43/0888;
H04L 65/80;** H04L 43/0829

(54) **METHOD AND APPARATUS FOR DETERMINING VIDEO QUALITY**

VERFAHREN UND VORRICHTUNG ZUR BESTIMMUNG DER VIDEOQUALITÄT

PROCÉDÉ ET APPAREIL PERMETTANT DE DÉTERMINER LA QUALITÉ VIDÉO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.06.2016  CN 201610422907**

(43) Date of publication of application:
**03.03.2021  Bulletin 2021/09**

(62) Document number(s) of the earlier application(s) in
accordance with Art. 76 EPC:
**17812579.5 / 3 461 088**

(73) Proprietor: **HUAWEI TECHNOLOGIES CO., LTD.
Shenzhen, Guangdong 518129 (CN)**

(72) Inventors:
• **YANG, Youqing**
  **Shenzhen, Guangdong 518129 (CN)**
• **XIONG, Jie**
  **Shenzhen, guangdong 518129 (CN)**
• **ZHANG, Shen**
  **Shenzhen, Guangdong 518129 (CN)**

(74) Representative: **Gill Jennings & Every LLP
The Broadgate Tower
20 Primrose Street
London EC2A 2ES (GB)**

(56) References cited:
**CN-A- 103 188 236    CN-A- 104 113 788**

• **YU PENG ET AL: "An objective multi-layer QoE
Evaluation for TCP video streaming", 2015
IFIP/IEEE INTERNATIONAL SYMPOSIUM ON
INTEGRATED NETWORK MANAGEMENT (IM),
IEEE, 11 May 2015 (2015-05-11), pages 1255-1260,
XP033167966, DOI: 10.1109/INM.2015.7140477**
• **EDMOND W W CHAN ET AL: "Measurement of
loss pairs in network paths", PROCEEDINGS OF
THE 10TH ANNUAL CONFERENCE ON INTERNET
MEASUREMENT, IMC '10, ACM PRESS, NEW
YORK, NEW YORK, USA, 1 November 2010
(2010-11-01), pages 88-101, XP058351346, DOI:
10.1145/1879141.1879154 ISBN:
978-1-4503-0483-2**

EP 3 787 245 B1

## Description

### TECHNICAL FIELD

The present invention relates to the communications field, and in particular, to a method and an apparatus for determining video quality.

### BACKGROUND

An over the top (English: over the top, OTT for short) video service means that a provider such as Youku and iQIYI provides a video head end and an application program that is installed in a terminal device such as a mobile phone, and a set-top box. The OTT video service transmits media data by using the standard Hypertext Transfer Protocol (English: hypertext transfer protocol, HTTP for short)/Transmission Control Protocol (English: transmission control protocol, TCP for short), and can segment a large video file into videos of different sizes and quickly transmit the videos to a terminal used by a user, so that the user can download the videos when watching. A video mean opinion score (English: video mean opinion score, MOS-V for short) is a commonly-used evaluation criterion for measuring quality of a network video.

In an existing OTT video quality evaluation method, a video stream mirroring manner is used to export a video stream on each network device in a video network, detect data such as a TCP throughput and an actual played amount of the video stream, evaluate video quality of this node by calculating a MOS-V value on the network device, and may further locate a network fault based on MOS-V values on a plurality of network devices in the video network when the video network is faulty.

However, the TCP protocol has a natural packet loss retransmission mechanism. When detecting a packet loss, a TCP receive end notifies a TCP transmit end of a sequence number of a lost packet, and the TCP transmit end retransmits the lost packet, reduces a sending rate of the TCP transmit end by half, and then gradually increases the sending rate. When a packet loss occurs anywhere in the video network, the TCP sending rate on the entire video network drastically drops. As a result, the terminal device cannot receive sufficient packets to support video playing, MOS-V values on all network devices in the video network are extremely low, and the network fault of the video network cannot be located by using the MOS-V values on the plurality of network devices in the video network.

Therefore, the existing method for determining video quality is not applicable to TCP transmission.
YU PENG ET AL, "An objective multi-layer QoE Evaluation for TCP video streaming", 2015 IFIP/IEEE INTERNATIONAL SYMPOSIUM ON INTEGRATED NETWORK MANAGEMENT (IM), IEEE, (20150511), doi: 10.1109/INM.2015.7140477, pages 1255 - 1260, describes an objective hierarchical evaluation for transmission control protocol video streaming.
EDMOND W W CHAN ET AL, "Measurement of loss pairs in network paths", PROCEEDINGS OF THE 10TH ANNUAL CONFERENCE ON INTERNET MEASUREMENT, IMC '10, ACM PRESS, NEW YORK, NEW YORK, USA, (20101101), doi: 10.1145/1879141.1879154, ISBN 978-1-4503-0483-2, pages 88 - 101, describes loss-pair measurement.
CN 104113788 A describes a QoE training and assessment method and system of a TCP video stream service.
CN 103188236 A describes an assessment method and an assessment device for media transmission quality.

### SUMMARY

Embodiments of the present invention provide a method and an apparatus for determining video quality, so as to accurately determine quality of a video transmitted by using the TCP protocol.

According to a first aspect, the present invention provides a method for determining video quality as defined in the appended claims.

In the method for determining video quality provided in the present invention, the video quality is determined by using a KPI parameter of a network layer, and video quality on an entire link is not reduced due to impact of a TCP packet loss retransmission mechanism. Therefore, quality of a video transmitted by using the TCP protocol can be accurately determined.

With reference to the first aspect, in a first possible implementation of the first aspect, the determining a Transmission Control Protocol TCP throughput of the first network device based on the network KPI parameter on the first network device includes: determining a first packet loss rate of the first network device based on the first RTT; and determining the TCP throughput of the first network device based on the first RTT and the first packet loss rate.

Because accuracy of an RTT measured in a live network is higher than that of a packet loss rate measured in the live network, the packet loss rate with higher accuracy can be obtained based on the measured RTT.

In the method for determining video quality provided in the present invention, higher accuracy of the video quality is determined based on the first RTT measured on the first network device and the packet loss rate with higher accuracy obtained based on the first RTT.

With reference to the first possible implementation of the first aspect, in a second possible implementation of the first aspect, the determining a first packet loss rate of the first network device based on the first RTT includes: determining a first corrected RTT of the first network device based on the first RTT, where the first corrected RTT is obtained after the first RTT is corrected; and searching a preset mapping table based on the first corrected RTT, to obtain a first mapping entry corresponding to the first corrected RTT, and determining a packet loss rate in the first mapping entry as the first packet loss rate of the first network device, where each entry in the mapping table includes a correspondence between an RTT and a packet loss rate.

Optionally, a video network system may obtain a mapping relationship between the RTT and the packet loss rate in advance based on RTTs collected in the live network in different time periods and packet loss rates corresponding to the RTTs, to generate the mapping table.

In the method for determining video quality provided in the present invention, the preset mapping table may be searched based on the first RTT measured on the first network device, to obtain the first packet loss rate with higher accuracy. The video quality with higher accuracy is determined based on the measured first RTT and the first packet loss rate with higher accuracy.

With reference to the second possible implementation of the first aspect, in a third possible implementation of the first aspect, the determining the TCP throughput of the first network device based on the first RTT and the first packet loss rate includes: determining the TCP throughput of the first network device based on the first corrected RTT and the first packet loss rate.

In the method for determining video quality provided in the present invention, accuracy of the video quality on the first network device can be further improved by using the first corrected RTT with higher accuracy and the first packet loss rate with higher accuracy.

With reference to the second or the third possible implementation of the first aspect, in a fourth possible implementation of the first aspect, the determining a first corrected RTT of the first network device based on the first RTT includes: obtaining a second RTT between the head-end device and a second network device, and a third RTT between the first network device and the second network device; and determining the first corrected RTT of the first network device based on the first RTT, the second RTT, and the third RTT.

In the method for determining video quality provided in the present invention, the first RTT is corrected by using relative accuracy of the first RTT, the second RTT, and the third RTT, so as to obtain the first corrected RTT with higher accuracy. The video quality is determined based on the first corrected RTT and the first packet loss rate, so as to further improve accuracy of the determined video quality.

With reference to the fourth possible implementation of the first aspect, in a fifth possible implementation of the first aspect, if a video stream successively passes through the second network device and the first network device after being sent from the head-end device, the first corrected RTT of the first network device meets one of the following formulas: if

$$RTT_{OB} \geq 2*(RTT_{OA}+RTT_{AB}), \quad RTT'_{OB}=1.5*(RTT_{OA}+RTT_{AB});$$

if

$$RTT_{OB} \geq 1.5*(RTT_{OA}+RTT_{AB}), \quad RTT'_{OB}=1.2*(RTT_{OA}+RTT_{AB});$$

and
if

$$RTT_{OB} \leq 0.5*(RTT_{OA}+RTT_{AB}), \quad RTT'_{OB}=0.75*(RTT_{OA}+RTT_{AB}),$$

where $RTT'_{OB}$ represents the first corrected RTT, $RTT_{OB}$ represents the first RTT, $RTT_{OA}$ represents the second RTT, and $RTT_{AB}$ represents the third RTT.

With reference to the fourth possible implementation of the first aspect, in a sixth possible implementation of the first aspect, if a video stream successively passes through the first network device and the second network device after being sent from the head-end device, and a plurality of network devices exist between the head-end device and the first network device, the determining the first corrected RTT of the first network device based on the first RTT, the second RTT, and the third RTT includes: determining a second corrected RTT of the second network device based on the first RTT, the second RTT, and the third RTT, where the second corrected RTT is obtained after the second RTT is corrected; and determining the first corrected RTT based on the second corrected RTT and the third RTT.

With reference to the sixth possible implementation of the first aspect, in a seventh possible implementation of the first aspect, the first corrected RTT is determined according to the following formula:

$$RTT'_{OA} = RTT'_{OB} - RTT_{AB},$$

where $RTT'_{OA}$ represents the first corrected RTT, $RTT'_{OB}$ represents the second corrected RTT, and $RTT_{AB}$ represents the third RTT.

With reference to any one of the second to the seventh possible implementations of the first aspect, in an eighth possible implementation of the first aspect, the network KPI parameter further includes a maximum bandwidth MaxBW of the first network device; and the TCP throughput of the first network device is determined according to the following formula:

$$Throughput \leq Min \left( \frac{WS}{RTT'}, \frac{MSS}{RTT'} * \frac{1}{\sqrt{p'}}, \; MaxBW \right),$$

where

*Throughput* represents the TCP throughput, *RTT'* represents the first corrected RTT, *p'* represents the first packet loss rate, *WS* represents a congestion window, and *MSS* represents a maximum packet length.

With reference to any one of the first aspect, or the first to the eighth possible implementations of the first aspect, in a ninth possible implementation of the first aspect, the determining video quality on the first network device based on the TCP throughput and a played video amount of the first network device includes: determining a video mean opinion score MOS-V value on the first network device based on the TCP throughput and the played video amount of the first network device.

With reference to the ninth possible implementation of the first aspect, in a tenth possible implementation of the first aspect, the method further includes: sending a notification message to a control center, where the notification message is used to notify the MOS-V value on the first network device, so that the control center determines a location of a video network fault based on a MOS-V value on each of the plurality of the network devices.

Optionally, the apparatus for determining video quality may be deployed on each network device. After determining video quality on the network device in which each apparatus for determining video quality is located, each apparatus for determining video quality may report the video quality to the control center of the video network system, so that the control center monitors and manages video quality of an entire network. In addition, when a network link is faulty, the control center may further determine a location of the network fault based on the MOS-V value on each network device.

With reference to the ninth possible implementation of the first aspect, in an eleventh possible implementation of the first aspect, the method further includes: determining a location of a video network fault based on a MOS-V value on each of the plurality of the network devices.

Optionally, the apparatus for determining video quality may be the control center. After obtaining the MOS-V value on each network device in the video network system, the control center may determine the location of the network fault based on the MOS-V value on each network device.

According to a second aspect, that does not fall within the scope of the claims, there is provided a method for locating a network fault, and the method includes: obtaining a first Transmission Control Protocol TCP throughput, on a first network device, of a first video stream sent by a head-end device, and a second TCP throughput, on a second network device, of a second video stream sent by the head-end device, where content of the first video stream is the same as that of the second video stream, a destination Internet Protocol IP address of the first video stream is an IP address of the first network device, a destination IP address of the second video stream is an IP address of the second network device, and the second video stream is sent to the second network device through the first network device; and determining a location of the video network fault based on the first TCP throughput and the second TCP throughput.

In the method for locating a network fault, the first Transmission Control Protocol TCP throughput, on the first network device, of the first video stream whose destination IP address is the IP address of the first network device, and the second TCP throughput, on the second network device, of the second video stream whose destination IP address is the IP address of the second network device are obtained. The content of the first video stream is the same as that of the second video stream, the second video stream is sent to the second network device through the first network device, and the location of the video network fault is determined based on the first TCP throughput and the second TCP throughput. The location of the video network fault is accurately determined.

With reference to the second aspect, that does not fall within the scope of the claims, in a first possible implementation of the second aspect, the determining a location of the video network fault based on the first TCP throughput and the second TCP throughput includes: determining a first MOS-V value of the first video stream on the first network device, and a second MOS-V value of the second video stream on the second network device based on the first TCP throughput and the second TCP throughput; and determining the location of the video network fault based on the first MOS-V value and the second MOS-V value.

It should be understood that because videos of different types have different requirements for a TCP throughput, for example, a high-definition video and a standard-definition video bring greatly different user experience effects in the case of a same TCP throughput. Therefore, video quality of the first video stream on the first network device and video quality of the second video stream on the second network device can be further evaluated by using a MOS-V value.

In the method for locating a network fault, the location of the network fault can be more accurately determined by using the MOS-V value of the first video stream on the first network device and the MOS-V value of the second video stream on the second network device.

With reference to the first possible implementation of the second aspect, that does not fall within the scope of the claims, in a second possible implementation of the second aspect, the determining the location of the video network fault based on the first MOS-V value and the second MOS-V value includes: if both the first MOS-V value and the second MOS-V value are less than a first threshold, determining that the video network fault occurs between the head-end device and the first network device; or if the second MOS-V value is far less than the first MOS-V value, and the second MOS-V value is less than the first threshold, determining that the video network fault occurs between the first network device and the second network device.

According to a third aspect, the present invention provides an apparatus for determining video quality as defined in the appended claims.

According to a fourth aspect, that does not fall within the scope of the claims, there is provided an apparatus for locating a network fault, configured to perform the method in the second aspect, that does not fall within the scope of the claims, or any possible implementation of the second aspect. Specifically, the apparatus includes units configured to perform the method in the second aspect or any possible implementation of the second aspect.

According to a fifth aspect, the present invention provides an apparatus for determining video quality, where the apparatus includes a receiver, a transmitter, a memory, a processor, and a bus system. The receiver, the transmitter, the memory, and the processor are connected by using the bus system. The memory is configured to store an instruction. The processor is configured to execute the instruction stored in the memory, and control the transmitter to transmit a signal. When executing the instruction stored in the memory, the processor can implement the method in the first aspect or any possible implementation of the first aspect.

According to a sixth aspect, that does not fall within the scope of the claims, there is provided an apparatus for locating a network fault, where the apparatus includes a receiver, a transmitter, a memory, a processor, and a bus system. The receiver, the transmitter, the memory, and the processor are connected by using the bus system. The memory is configured to store an instruction. The processor is configured to execute the instruction stored in the memory, and control the transmitter to transmit a signal. When executing the instruction stored in the memory, the processor can implement the method in the second aspect, that does not fall within the scope of the claims, or any possible implementation of the second aspect.

According to a seventh aspect, the present invention provides a computer-readable medium, configured to store a computer program, where the computer program includes an instruction that is used to perform the method in the first aspect or any possible implementation of the first aspect.

According to a eighth aspect, that does not fall within the scope of the claims, there is provided a computer-readable medium, configured to store a computer program, where the computer program includes an instruction that is used to perform the method in the second aspect, that does not fall within the scope of the claims or any possible implementation of the second aspect.

**BRIEF DESCRIPTION OF DRAWINGS**

To describe the technical solutions in the embodiments of the present invention more clearly, the following briefly describes the accompanying drawings required for describing the embodiments.

FIG. 1 is a schematic block diagram of a video network system according to an embodiment of the present invention;

FIG. 2 is another schematic block diagram of a video network system according to an embodiment of the present invention;

FIG. 3 is a schematic flowchart of a method for determining video quality according to an embodiment of the present invention;

FIG. 4 is a schematic scenario diagram of another method for determining video quality according to an embodiment of the present invention;

FIG. 5 is a schematic flowchart of a method for locating a network fault according to an embodiment not falling within the scope of the claims;

FIG. 6 is a schematic scenario diagram of another method for locating a network fault according to an embodiment not falling within the scope of the claims;

FIG. 7 is a schematic block diagram of an apparatus for determining video quality according to an embodiment of the present invention;

FIG. 8 is a schematic block diagram of an apparatus for locating a network fault according to an embodiment not falling within the scope of the claims;

FIG. 9 is a schematic block diagram of another apparatus for determining video quality according to an embodiment of the present invention; and

FIG. 10 is a schematic block diagram of another apparatus for locating a network fault according to an embodiment not falling within the scope of the claims.

## DESCRIPTION OF EMBODIMENTS

The following describes the technical solutions in the embodiments of the present invention with reference to the accompanying drawings in the embodiments of the present invention.

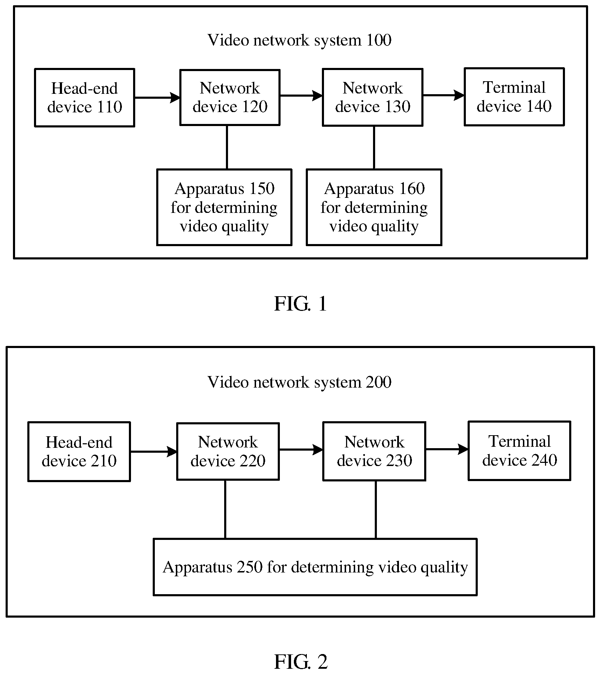

FIG. 1 shows a schematic block diagram of a video network system 100 applied to an embodiment of the present invention. As shown in FIG. 1, the video network system 100 includes a head-end device 110, at least one network device (the figure shows a network device 120 and a network device 130), at least one terminal device 140, and at least one apparatus for determining video quality (the figure shows an apparatus 150 for determining video quality and an apparatus 160 for determining video quality). A video stream sent by the head-end device 110 is transmitted to the terminal device 140 by successively passing through the network device 120 and the network device 130, the apparatus 150 for determining video quality is configured to determine video quality on the network device 120, and the apparatus 160 for determining video quality is configured to determine video quality on the network device 130.

Optionally, the video network system may further include a control center. The control center may receive video quality reported by each of a plurality of apparatuses for determining video quality, uniformly manage and monitor quality of a video service of an entire network, and in addition, may locate a video network fault when detecting an exception of a video network. However, this embodiment of the present invention is not limited thereto.

Optionally, the terminal device in this embodiment of the present invention may be a device that can decode the video stream, such as a set-top box, a television, a mobile phone, a computer, or a tablet computer.

Optionally, the network device in this embodiment of the present invention may be a core router (English: core router, CR for short), a broadband remote access server (English: broadband remote access server, BRAS for short), a LAN switch (English: LAN switch, LSW for short), an optical line terminal (English: optical line terminal, OLT for short), a home gateway (English: home gateway, HGW for short), or the like, and this is not limited in this embodiment of the present invention.

Optionally, the apparatus for determining video quality in this embodiment of the present invention may be mounted as a standalone device near the network device or the terminal device, or may be integrated into the network device or the terminal device, so as to determine the video quality on the network device or the terminal device.

FIG. 2 shows a schematic block diagram of another video network system 200 applied to an embodiment of the present invention. As shown in FIG. 2, the video network system 200 includes a head-end device 210, at least one network device (the figure shows a network device 220 and a network device 230), at least one terminal device 240, and an apparatus 250 for determining video quality. A video stream sent by the head-end device 210 is transmitted to the terminal device 240 by successively passing through the network device 220 and the network device 230, the apparatus 250 for determining video quality is configured to determine video quality on the network device 220 and the network device 230. It can be seen that, different from FIG. 1, video quality on all network devices is determined by a same apparatus 250 for determining video quality in FIG. 2.

Optionally, the apparatus for determining video quality may be a control center of the video network system. The control center uniformly manages and monitors quality of a video service of an entire network, and in addition, may further locate a video network fault based on the video quality on each of a plurality of network devices when detecting an exception of a video network. However, this embodiment of the present invention is not limited thereto.

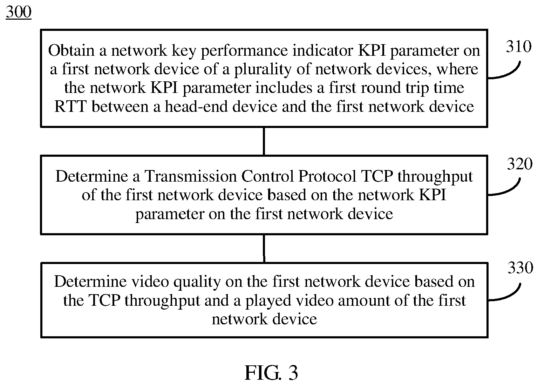

FIG. 3 shows a schematic flowchart of a method 300 for determining video quality according to an embodiment of the present invention. The method 300 is applied to the video network system in the embodiment of the present invention shown in FIG. 1 or FIG. 2. For example, the method may be performed by the apparatus for determining video quality in FIG. 1 or FIG. 2. However, this embodiment of the present invention is not limited thereto.

S310. Obtain a network key performance indicator KPI parameter on a first network device of a plurality of network devices, where the network KPI parameter includes a first round trip time RTT between a head-end device and the first network device.

S320. Determine a Transmission Control Protocol TCP throughput of the first network device based on the network KPI parameter on the first network device.

S330. Determine video quality on the first network device based on the TCP throughput and a played video amount of the first network device.

In the method for determining video quality provided in the present invention, the video quality is determined by using a KPI parameter of a network layer, and video quality on an entire link is not reduced due to impact of a TCP packet loss retransmission mechanism. Therefore, quality of a video transmitted by using the TCP protocol can be accurately determined.

It should be understood that the network KPI parameter includes an RTT, a packet loss rate, and a physical bandwidth. The physical bandwidth is a static indicator and can be obtained in an out-of-band or a static manner. The RTT and the packet loss rate are dynamic indicators, and vary according to a network condition. Therefore, the RTT and the packet loss rate need to be monitored and obtained in real time.

Optionally, the apparatus for determining video quality may obtain the RTT and the packet loss rate on the network device by using the Two-Way Active Measurement Protocol (English: two-way active measurement protocol, TWAMP for short) deployed in a live network, or may obtain the RTT and the packet loss rate on the network device by coloring a packet, and this embodiment of the present invention is not limited thereto.

Specifically, in S310, the video stream sent by the head-end device successively passes through the first network device and the second network device, and finally is transmitted to the terminal device for being decoded and played. The apparatus for determining video quality may obtain a first RTT between the head-end device and the first network device.

Specifically, in S320, the apparatus for determining video quality may determine a first packet loss rate of the first network device based on the first RTT, and determine the TCP throughput of the first network device based on the first RTT and the first packet loss rate.

It should be understood that due to instantaneity and uncertainty of a network change, the RTT and the packet loss rate only can generally be obtained in a single measurement or a plurality of measurements in a short time. Therefore, there is a particular degree of error rate in measurement accuracy. For example, measurement accuracy of the RTT is higher than that of the packet loss rate. Therefore, a packet loss rate with higher accuracy corresponding to an RTT with higher accuracy can be obtained based on the RTT.

It should further be understood that there is a particular mapping relationship between the RTT and the packet loss rate. For example, in a case of no traffic or light load in a network, when the round trip time in the network is $RTT_0$, the packet loss rate is approximately 0 or close to 0. When the round trip time continues to increase and reaches $RTT_1$, packet loss starts to occur in the network, and the packet loss rate is greater than 0. When network traffic continues to increase and reaches heavy load, the round trip time in the network is $RTT_2$. In this case, the packet loss rate is approximately 1. Under a fixed network condition, the packet loss rate is generally caused by heavy load of the network. Therefore, the packet loss rate with higher accuracy can be obtained by using the RTT and a preset mapping table, and each entry in the mapping table includes the mapping relationship between the RTT and the packet loss rate.

Optionally, before S320, the video network system may obtain the mapping relationship between the RTT and the packet loss rate in advance based on RTTs collected in the live network in different time periods and the packet loss rates corresponding to the RTTs, to generate the mapping table, and send the mapping table to the apparatus for determining video quality, so that the apparatus for determining video quality obtains a corrected RTT based on the mapping table and the first RTT on the first network device. However, this embodiment of the present invention is not limited thereto.

Optionally, the mapping relationship between the RTT and the packet loss rate may be represented in a form such as a mapping table, a line graph, a histogram, and this is not limited in this embodiment of the present invention.

It should be understood that, because accuracy of the RTT measured in the live network is higher than that of the packet loss rate measured in the live network, the packet loss rate with higher accuracy can be obtained based on the measured RTT.

Specifically, the apparatus for determining video quality may correct the first RTT of the first network device to obtain a first corrected RTT of the first network device, search the preset mapping table based on the first corrected RTT, to obtain a first mapping entry corresponding to the first corrected RTT, and determine a packet loss rate in the first mapping entry as the first packet loss rate of the first network device. Each entry in the mapping table includes a correspondence between the RTT and the packet loss rate.

Optionally, the apparatus for determining video quality may determine the video quality based on the first RTT measured on the first network device and the first packet loss rate with higher accuracy obtained based on the first RTT.

Optionally, the apparatus for determining video quality may further determine the video quality based on the first corrected RTT after the first RTT on the first network device is corrected and the first packet loss rate.

In the method for determining video quality in this embodiment of the present invention, accuracy of the video quality on the first network device can be further improved by using the first corrected RTT with higher accuracy and the first packet loss rate with higher accuracy.

Specifically, the apparatus for determining video quality may obtain the first RTT between the head-end device and the first network device, a second RTT between the head-end device and the second network device, and a third RTT between the first network device and the second network device, and correct the first RTT based on the first RTT, the second RTT, and the third RTT, to obtain the first corrected RTT of the first network device.

In an optional embodiment, it is assumed that the video stream sent by the head-end device successively passes through the second network device and the first network device. The second network device is closer to the head-end, stability of the network KPI parameter is better, accuracy of the second RTT, the third RTT, and the first RTT obtained by the apparatus for determining video quality successively decreases. Therefore, the first RTT may be corrected according to one of formulas (1) to (3), to obtain the first corrected RTT.

If

$$RTT_{OB} \geq 2*(RTT_{OA} + RTT_{AB}), \quad RTT'_{OB} = 1.5*(RTT_{OA} + RTT_{AB}) \quad (1);$$

if

$$RTT_{OB} \geq 1.5*(RTT_{OA} + RTT_{AB}), \quad RTT'_{OB} = 1.2*(RTT_{OA} + RTT_{AB}) \quad (2);$$

or
if

$$RTT_{OB} \leq 0.5*(RTT_{OA} + RTT_{AB}), \quad RTT'_{OB} = 0.75*(RTT_{OA} + RTT_{AB}) \quad (3),$$

where $RTT'_{OB}$ represents the first corrected RTT, $RTT_{OB}$ represents the first RTT, $RTT_{OA}$ represents the second RTT, and $RTT_{AB}$ represents the third RTT.

In the method for determining video quality provided in the present invention, the first RTT is corrected by using relative accuracy of the first RTT, the second RTT, and the third RTT, so as to obtain the first corrected RTT with higher accuracy. The video quality is determined based on the first corrected RTT and the first packet loss rate, so as to further improve accuracy of the determined video quality.

In another optional embodiment, it is assumed that the video stream sent by the head-end device successively passes through the first network device and the second network device, there are more other network devices between the head-end device and the first network device, and there is no or fewer other network devices between the first network device and the second network device. Therefore, due to accumulation of RTTs by a plurality of other network devices in a video stream transmission process and a loss on a video link, accuracy of the first RTT, the third RTT, and the second RTT successively decreases. Therefore, the first RTT may be corrected based on the second corrected RTT and the third RTT by using a formula (4), to obtain the first corrected RTT.

$$RTT'_{OA} = RTT'_{OB} - RTT_{AB} \quad (4),$$

where $RTT'_{OA}$ represents the first corrected RTT, $RTT'_{OB}$ represents the second corrected RTT, and $RTT_{AB}$ represents the third RTT.

Optionally, the second corrected RTT may be obtained according to the method in the foregoing embodiment.

Alternatively, another method may be used to correct the second RTT based on the first RTT, the second RTT, and the third RTT, so as to obtain the second corrected RTT. This is not limited in this embodiment of the present invention.

Specifically, in S320, after obtaining the first corrected RTT and the first packet loss rate, the apparatus for determining video quality may determine the TCP throughput of the first network device according to a formula (5).

$$Throughput \leq Min \ (\frac{WS}{RTT'}, \frac{MSS}{RTT'} * \frac{1}{\sqrt{p'}}, \ MaxBW) \tag{5},$$

where

*Throughput* represents the TCP throughput, *RTT'* represents the first corrected RTT, *p'* represents the first packet loss rate, *WS* represents a congestion window, and *MSS* represents a maximum packet length.

Optionally, in a video network system shown in FIG. 1, the apparatus for determining video quality may be deployed on each network device, and report video quality on the network device to a control center by using a notification message after obtaining the video quality on the network device, so that the control center uniformly monitors video quality of all network devices in the video network system, and can immediately locate a network fault based on video quality on each network device when the video network is faulty.

Optionally, in a video network system shown in FIG. 2, the apparatus for determining video quality may be a control center in the video network system, and the apparatus for determining video quality may obtain video quality on each network device in the video network system, and locate a network fault based on the video quality on each network device.

Specifically, in S330, the apparatus for determining video quality may receive a video description file sent by a video head end, and the video description file includes playing information such as a video file size, playing duration, and a bit rate. The apparatus for determining video quality may estimate, according to the video description file, a currently played video amount of the terminal device under normal playing, and determine the video quality on the first network device based on the TCP throughput and the played video amount of the first network device.

Optionally, the apparatus for determining video quality may calculate, based on the TCP throughput and the played video amount of the first network device, a MOS-V value on the first network device for evaluating the video quality, or may use another video quality evaluation method to evaluate the video quality, and this is not limited in this embodiment of the present invention.

It should be understood that the NOS-V value is usually a value within a range of 1 to 5. A larger value indicates better user experience. Generally, a user considers that video quality with the MOS-V value of at least 3.6 is acceptable.

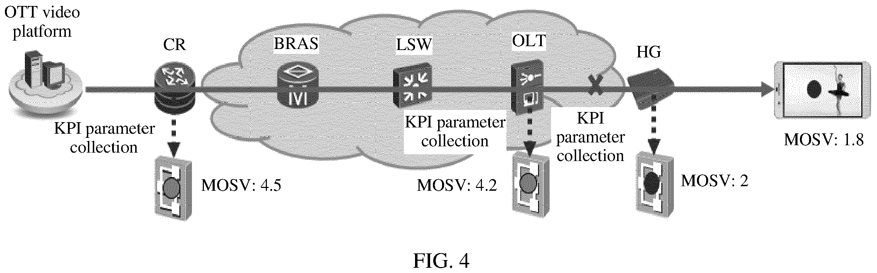

FIG. 4 shows a schematic scenario diagram of a method for determining video quality according to an embodiment of the present invention. As shown in FIG. 4, a video stream that is sent by an OTT video platform to a terminal device successively passes through a CR, a BRAS, an LSW, an OLT, and an HGW.

In an optional embodiment, the video network system may deploy a first apparatus for determining video quality on the OLT, deploy a second apparatus for determining video quality on the CR, separately detect video quality on the CR and the OLT, and report, to a control center, the video quality detected by the foregoing two apparatuses for determining video quality, so that the control center determines, based on the video quality on the CR and the OLT, whether there is a network fault on a transmission link that is passed through by the video stream transmitted from a head-end device to the OLT. If there is a network fault, the network fault can be further located.

Specifically, the first apparatus for determining video quality deployed on the OLT may obtain a first RTT between the OTT video platform and the OLT, obtain a first packet loss rate of the OLT based on the first RTT and a preset mapping table, and determine the video quality on the OLT based on the first RTT and the first packet loss rate.

Optionally, the second apparatus for determining video quality deployed on the CR may obtain a second RTT between the OTT video platform and the CR. Because the CR is closer to the OTT video platform than the OLT, accuracy of the second RTT is higher than that of the first RTT. Therefore, the first apparatus for determining video quality may correct the first RTT on the OLT based on the second RTT of the CR, to obtain a first corrected RTT, and determine video quality on the OLT based on the first corrected RTT and the first packet loss rate.

Optionally, the first apparatus for determining video quality may further obtain a third RTT between the CR and the OLT, determine the first corrected RTT of the OLT according to one of the formulas (1) to (3) described above, determine the first packet loss rate of the OLT based on the first corrected RTT and the preset mapping table, and determine a TCP throughput of the OLT based on the first corrected RTT and the first packet loss rate of the OLT.

Optionally, the first apparatus for determining video quality may determine a MOS-V value on the OLT based on the throughput and a played video amount of the OLT, or determine the video quality on the OLT by using another video quality evaluation method, and this is not limited in this embodiment of the present invention.

Optionally, the first apparatus for determining video quality and the second apparatus for determining video quality may separately send a notification message to the control center, to notify the video quality on the CR and the OLT, so that the control center may determine, based on the video quality on the CR and the OLT, whether there is a network fault on the transmission link between the head-end device of the OTT video platform and the OLT. If there is a network fault, the network fault can be further located.

Specifically, as shown in FIG. 4, it is assumed that a second MOS-V value on the CR obtained by the control center is 4.5, a first MOS-V value on the OLT is 4.2, and the two MOS-V values are both greater than a first threshold, it may be considered that there is no fault on a video link between the CR and the OLT.

Optionally, the control center may obtain the first threshold or configure the first threshold in the control center, the first threshold may be a MOS-V value of video quality acceptable to a user, and this is not limited in this embodiment of the present invention.

In another optional embodiment, the video network system may deploy a first apparatus for determining video quality on the OLT, deploy a second apparatus for determining video quality on the HGW, separately detect video quality on the HGW and the OLT, and report, to the control center, the video quality detected by the foregoing two apparatuses for determining video quality, so that the control center determines, based on the video quality on the HGW and the OLT, whether there is a network fault on a transmission link that is passed through by the video stream transmitted from the head-end device to the HGW. If there is a network fault, the network fault can be further located.

Specifically, the first apparatus for determining video quality deployed on the OLT may obtain the first RTT between the OTT video platform and the OLT, obtain the first packet loss rate of the OLT based on the first RTT and the preset mapping table, and determine the video quality on the OLT based on the first RTT and the first packet loss rate.

Optionally, the second apparatus for determining video quality deployed on the HGW may obtain a second RTT between the OTT video platform and the HGW, and the first apparatus for determining video quality may further obtain a third RTT between the OLT and the HGW. Because there are a plurality of network devices between the OLT and the OTT video platform, and accuracy of the RTT decreases after each network device is passed through, accuracy of the third RTT, the first RTT, and the second RTT successively decreases. The first apparatus for determining video quality may correct the first RTT on the OLT based on the second RTT of the HGW, to obtain a first corrected RTT, and determine the video quality on the OLT based on the first corrected RTT and the first packet loss rate.

Optionally, the first apparatus for determining video quality may obtain a second corrected RTT on the HGW, determine the first corrected RTT on the OLT according to the foregoing formula (4), determine the first packet loss rate based on the first corrected RTT and the preset mapping table, and determine the TCP throughput of the OLT based on the first corrected RTT and the first packet loss rate.

Optionally, the second corrected RTT may be obtained according to the method in the foregoing embodiment. Alternatively, another method may be used to correct the second RTT based on the first RTT, the second RTT, and the third RTT, so as to obtain the second corrected RTT. This is not limited in this embodiment of the present invention.

Optionally, the first apparatus for determining video quality may determine the MOS-V value on the OLT based on the throughput and the played video amount of the OLT, or determine the video quality on the OLT by using another video quality evaluation method, and this is not limited in this embodiment of the present invention.

Optionally, the first apparatus for determining video quality and the second apparatus for determining video quality may separately send a notification message to the control center, to notify the video quality on the OLT and the HGW, so that the control center may determine, based on the video quality on the OLT and the HGW, whether there is a network fault on the transmission link between the head-end device of the OTT video platform and the HGW. If there is a network fault, the network fault can be further located.

Specifically, as shown in FIG. 4, it is assumed that a first MOS-V value on the OLT obtained by the control center is 4.2, a second MOS-V value on the HGW is 2, and the second MOS-V value on the HGW is less than the first threshold, it may be considered that there is a network fault on a video link between the OLT and the HGW.

Optionally, the control center may obtain the first threshold or configure the first threshold in the control center, the first threshold may be the MOS-V value of the video quality acceptable to the user, and this is not limited in this embodiment of the present invention.

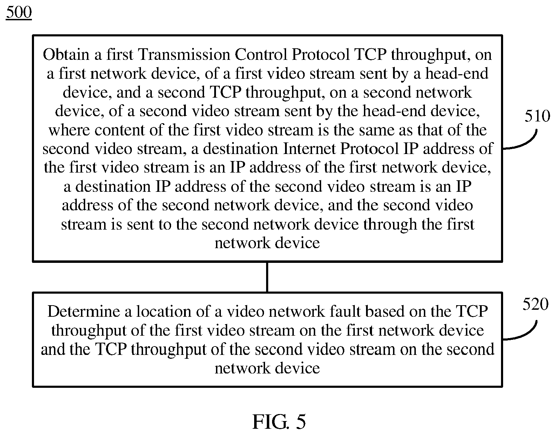

FIG. 5 shows a schematic flowchart of a method 500 for locating a network fault according to an embodiment not falling within the scope of the claims. The method 500 is applied to the video network system in the embodiment of the present invention shown in FIG. 2. For example, the method may be performed by an apparatus for locating a network fault, and the apparatus for locating a network fault may be, for example, the apparatus for determining video quality in FIG. 2. However, this embodiment is not limited thereto.

S510. Obtain a first Transmission Control Protocol TCP throughput, on a first network device, of a first video stream sent by a head-end device, and a second TCP throughput, on a second network device, of a second video stream sent by the head-end device, where content of the first video stream is the same as that of the second video stream, a destination Internet Protocol IP address of the first video stream is an IP address of the first network device, a destination IP address of the second video stream is an IP address of the second network device, and the second video stream is sent to the second network device through the first network device.

S520. Determine a location of the video network fault based on the first TCP throughput and the second TCP throughput.

Specifically, the apparatus for locating a network fault may obtain the first Transmission Control Protocol TCP throughput, on the first network device, of the first video stream whose destination IP address is the IP address of the first network device, and the second TCP throughput, on the second network device, of the second video stream whose destination IP address is the IP address of the second network device. The content of the first video stream is the same as that of the second video stream, the second video stream is sent to the second network device through the first network device, and the location of the video network fault is determined based on the first TCP throughput and the second TCP throughput. The location of the video network fault can be accurately determined.

It should be understood that some parameters of the first video stream sent by the head-end device and some parameters of the second video stream sent by the head-end device need to be consistent, for example, a video server address, a stream bit rate, and a stream resolution.

Optionally, if load of a video server is relatively light, a same video (segment) may be used for the first video stream and the second video stream. However, in consideration of hardware performance, a similar video stream may also be used.

Specifically, the apparatus for locating a network fault may obtain the first TCP throughput of the first video stream on the first network device and the second TCP throughput of the second video stream on the second network device, and locate the network fault in the video network system based on the first TCP throughput and the second TCP throughput.

Optionally, the apparatus for locating a network fault may determine a first MOS-V value on the first network device based on the first TCP throughput and a first played video amount on the first network device, determine a second MOS-V value on the second network device based on the second TCP throughput and a second played video amount on the second network device, and locate the network fault based on the first MOS-V value and the second MOS-V value. This is not limited in this embodiment of the present invention.

It should be understood that because videos of different types have different requirements for a TCP throughput, for example, a high-definition video and a standard-definition video bring greatly different user experience effects in the case of a same TCP throughput. Therefore, determining video quality of a video stream by using a MOS-V can further improve accuracy of locating the network fault.

It should be understood that the NOS-V value is usually a value within a range of 1 to 5. A larger value indicates better user experience. Generally, a user considers that video quality with the MOS-V value of at least 3.6 is acceptable.

It should further be understood that a video head end may send a video description file of the first video stream and a video description file of the second video stream respectively to the first network device and the second network device. A video description file includes playing information such as a video file size, playing duration, and a bit rate, so that the apparatus for locating a network fault may estimate a currently played video amount on the first network device and a currently played video amount on the second network device according to the video description file.

In an optional embodiment, if both the first MOS-V value of the first video stream on the first network device and the second MOS-V value of the second video stream on the second network device are less than a first threshold, the apparatus for locating a network fault determines that the video network fault occurs on a video link between the head-end device and the first network device. If the second MOS-V value of the second video stream on the second network device is far less than the first MOS-V value of the first video stream on the first network device, and the second MOS-V value of the second video stream on the second network device is less than the first threshold, the apparatus for locating a network fault determines that the video network fault occurs on the video link between the first network device and the second network device.

Optionally, the apparatus for locating a network fault may obtain the first threshold or configure the first threshold in the apparatus for locating a network fault, the first threshold may be the MOS-V value of the video quality acceptable to the user, and this is not limited in this embodiment of the present invention.

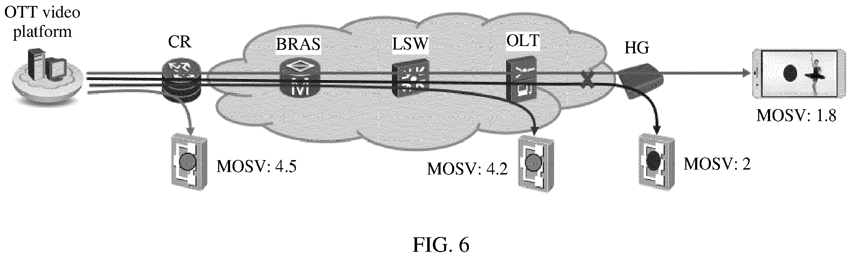

In an optional embodiment, FIG. 6 shows a schematic scenario diagram of a method for locating a network fault according to an embodiment not falling within the scope of the claims.

As shown in FIG. 6, an OTT video platform may send a first video stream to an OLT and send a second video stream to an HGW. Content of the first video stream is the same as that of the second video stream, the first video stream is sent to the OLT through a CR, a BRAS, and an LSW, and the second video stream is sent to the HGW through the CR, the BRAS, the LSW, and the OLT.

Specifically, the apparatus for locating a network fault may obtain video quality on the OLT and video quality on the HGW, and determine a location of the network fault based on the video quality on the OLT and the video quality on the HGW.

Optionally, the apparatus for locating a network fault may obtain a first TCP throughput of the first video stream on the OLT and a second TCP throughput of the second video stream on the HGW, and locate the network fault based on the first TCP throughput and the second throughput.

Optionally, the apparatus for locating a network fault may obtain the first TCP throughput of the first video stream on the OLT and the second TCP throughput of the second video stream on the HGW, determine a first MOS-V value on the OLT based on the first TCP throughput and a played video amount, determine a second MOS-V value on the HGW based on the second TCP throughput and a played video amount, and locate the network fault based on the first MOS-V value and the second MOS-V value. This is not limited in this embodiment of the present invention.

In an optional embodiment, as shown in FIG. 6, the first MOS-V value of the first video stream on the OLT is 4.2, the second MOS-V value of the second video stream on the HGW is 2, and the apparatus for locating a network fault may determine, based on the two MOS-V values, that the video network fault occurs between the OLT and the HGW. However, this embodiment of the present invention is not limited thereto.

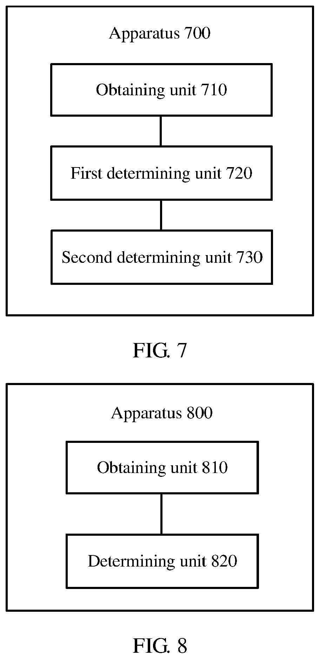

A method for determining video quality and a method for locating a network fault according to embodiments of the present invention are described above in detail with reference to FIG. 3 and FIG. 6, and an apparatus for determining video quality and an apparatus for locating a network fault according to embodiments of the present invention are described below with reference to FIG. 7 to FIG. 10.

FIG. 7 shows an apparatus 700 for determining video quality according to an embodiment of the present invention, and the apparatus 700 for determining video quality includes:

> an obtaining unit 710, configured to obtain a network key performance indicator KPI parameter on a first network device of a plurality of network devices, where the network KPI parameter includes a first round trip time RTT between a head-end device and the first network device;
> a first determining unit 720, configured to determine a Transmission Control Protocol TCP throughput of the first network device based on the network KPI parameter on the first network device obtained by the obtaining unit; and
> a second determining unit 730, configured to determine video quality on the first network device based on the TCP throughput and a played video amount of the first network device determined by the first determining unit.

Optionally, the first determining unit is specifically configured to: determine a first packet loss rate of the first network device based on the first RTT, and determine the TCP throughput of the first network device based on the first RTT and the first packet loss rate.

Optionally, the first determining unit is specifically configured to: determine a first corrected RTT of the first network device based on the first RTT, where the first corrected RTT is obtained after the first RTT is corrected; and search a preset mapping table based on the first corrected RTT, to obtain a first mapping entry corresponding to the first corrected RTT, and determine a packet loss rate in the first mapping entry as the first packet loss rate of the first network device, where each entry in the mapping table includes a correspondence between an RTT and a packet loss rate.

Optionally, the first determining unit is specifically configured to determine the TCP throughput of the first network device based on the first corrected RTT and the first packet loss rate.

Optionally, the obtaining module is further configured to obtain a second RTT between the head-end device and a second network device, and a third RTT between the first network device and the second network device. The first determining unit is specifically configured to determine the first corrected RTT of the first network device based on the first RTT, the second RTT, and the third RTT.

Optionally, if a video stream successively passes through the second network device and the first network device after being sent from the head-end device, the first corrected RTT of the first network device meets one of the following formulas:

if

$$RTT_{OB} \geq 2*(RTT_{OA} + RTT_{AB}), \quad RTT'_{OB} = 1.5*(RTT_{OA} + RTT_{AB});$$

if

$$RTT_{OB} \geq 1.5*(RTT_{OA} + RTT_{AB}), \quad RTT'_{OB} = 1.2*(RTT_{OA} + RTT_{AB});$$

and
if

$$RTT_{OB} \leq 0.5*(RTT_{OA} + RTT_{AB}), \quad RTT'_{OB} = 0.75*(RTT_{OA} + RTT_{AB}),$$

where $RTT'_{OB}$ represents the first corrected RTT, $RTT_{OB}$ represents the first RTT, $RTT_{OA}$ represents the second RTT, and $RTT_{AB}$ represents the third RTT.

Optionally, if the video stream successively passes through the first network device and the second network device after being sent from the head-end device, and a plurality of network devices exist between the head-end device and the first network device, the first determining unit is specifically configured to: determine a second corrected RTT of the second network device based on the first RTT, the second RTT, and the third RTT, where the second corrected RTT is obtained after the second RTT is corrected; and determine the first corrected RTT based on the second corrected RTT and the third RTT.

Optionally, the first determining unit is specifically configured to determine the first corrected RTT according to the following formula:

$$RTT'_{OA} = RTT'_{OB} - RTT_{AB},$$

where $RTT'_{OA}$ represents the first corrected RTT, $RTT'_{OB}$ represents the second corrected RTT, and $RTT_{AB}$ represents the third RTT.

Optionally, the network KPI parameter further includes a maximum bandwidth MaxBW of the first network device; and the first determining unit is specifically configured to determine the TCP throughput of the first network device according to the following formula:

$$Throughput \leq Min\ (\frac{WS}{RTT'}, \frac{MSS}{RTT'} * \frac{1}{\sqrt{p'}},\ MaxBW),$$

where

*Throughput* represents the TCP throughput, *RTT'* represents the first corrected RTT, *p'* represents the first packet loss rate, *WS* represents a congestion window, and *MSS* represents a maximum packet length.

Optionally, the second determining unit is specifically configured to determine a video mean opinion score MOS-V value on the first network device based on the TCP throughput and the played video amount of the first network device.

Optionally, the apparatus further includes a sending unit, and the sending unit is configured to send a notification message to a control center, where the notification message is used to notify the MOS-V value on the first network device, so that the control center determines a location of a video network fault based on a MOS-V value on each of the plurality of the network devices.

Optionally, the second determining unit is further configured to determine the location of the video network fault based on the MOS-V value on each of the plurality of the network devices.

It should be understood that the apparatus 700 for determining video quality herein is presented in a form of a functional unit. The term "unit" herein may refer to an application-specific integrated circuit (English: application-specific integrated circuit, ASIC for short), an electronic circuit, a processor (for example, a shared processor, a dedicated processor, or a group of processors) configured to execute one or more software or firmware programs, a memory, a combinational logic circuit, and/or another proper component that supports the described functions. In an optional example, a person skilled in the art may understand that, the apparatus 700 for determining video quality may be specifically the apparatus for determining video quality in the foregoing embodiments, and the apparatus 700 for determining video quality may be configured to perform procedures and/or steps corresponding to the apparatus for determining video quality in the foregoing method embodiment. To avoid repetition, details are not described herein again.

FIG. 8 shows an apparatus 800 for locating a network fault according to an embodiment not falling within the scope of the claims, and the apparatus 800 includes:

an obtaining unit 810, configured to obtain a first Transmission Control Protocol TCP throughput, on a first network device, of a first video stream sent by a head-end device, and a second TCP throughput, on a second network device, of a second video stream sent by the head-end device, where content of the first video stream is the same as that of the second video stream, a destination Internet Protocol IP address of the first video stream is an IP address of the first network device, a destination IP address of the second video stream is an IP address of the second network device, and the second video stream is sent to the second network device through the first network device; and

a determining unit 820, configured to determine a location of the video network fault based on the first TCP throughput and the second TCP throughput that are obtained by the obtaining unit.

Optionally, the determining unit is specifically configured to: determine a first MOS-V value of the first video stream on the first network device, and a second MOS-V value of the second video stream on the second network device based on the first TCP throughput and the second TCP throughput, and determine the location of the video network fault based on the first MOS-V value and the second MOS-V value.

Optionally, the determining unit is specifically configured to: if both the first MOS-V value and the second MOS-V value are less than a first threshold, determine that the video network fault occurs between the head-end device and the first network device.

Optionally, the determining unit is specifically configured to: if the second MOS-V value is far less than the first MOS-V value, and the second MOS-V value is less than the first threshold, determine that the video network fault occurs between the first network device and the second network device.

It should be understood that the apparatus 800 for locating a network fault herein is presented in a form of a functional unit. The term "unit" herein may refer to an ASIC, an electronic circuit, a processor (for example, a shared processor, a dedicated processor, or a group of processors) configured to execute one or more software or firmware programs, a memory, a combinational logic circuit, and/or another proper component that supports the described functions. In an optional example, a person skilled in the art may understand that, the apparatus 800 for locating a network fault may be specifically the apparatus for locating a network fault in the foregoing embodiments, and the apparatus 800 for locating a network fault may be configured to perform procedures and/or steps corresponding to the apparatus for locating a network fault in the foregoing method embodiment. To avoid repetition, details are not described herein again.

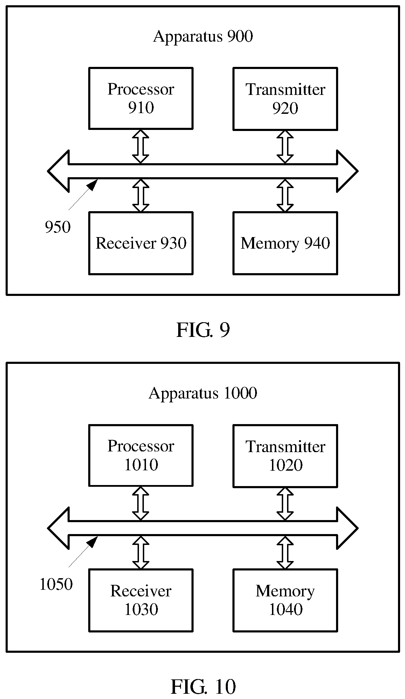

FIG. 9 shows another apparatus 900 for determining video quality according to an embodiment of the present invention, and the apparatus 900 includes a processor 910, a transmitter 920, a receiver 930, a memory 940, and a bus system 950. The processor 910, the transmitter 920, the receiver 930, and the memory 940 are connected by using the bus system 950. The memory 940 is configured to store an instruction. The processor 910 is configured to execute the instruction stored in the memory 940, so as to control the transmitter 920 to transmit a signal or control the receiver 930 to receive a signal. The transmitter 920 and the receiver 930 may be communications interfaces. Specifically, the transmitter 920 may be an interface configured to receive data and/or the instruction, the receiver 930 may be an interface configured to transmit the data and/or the instruction, and specific forms of the transmitter 920 and the receiver 930 are no longer described by using an example.

It should be understood that a head-end device 900 may be configured to perform steps and/or procedures corresponding to the apparatus for determining video quality in the foregoing method embodiment. Optionally, the memory 940 may include a read-only memory and a random access memory, and provide the instruction and the data to the processor. A part of the memory may further include a nonvolatile random access memory. For example, the memory may further store information about a device type. The processor 910 may be configured to execute the instruction stored in the memory, and when the processor executes the instruction, the processor can perform the steps corresponding to the apparatus for determining video quality in the foregoing method embodiment.

It should be understood that in this embodiment of the present invention, the processor may be a central processing unit (English: central processing unit, CPU for short), or the processor may be another general purpose processor, a digital signal processor (English: digital signal processor, DSP for short), an application-specific integrated circuit ASIC, a field programmable gate array (English: field programmable gate array, FPGA for short) or another programmable logic device, a discrete gate or a transistor logic device, a discrete hardware component, or the like. The general purpose processor may be a microprocessor, or the processor may be any conventional processor or the like.

FIG. 10 shows another apparatus 1000 for locating a network fault according to an embodiment not falling within the scope of the claims, and the apparatus 1000 includes a processor 1010, a transmitter 1020, a receiver 1030, a memory 1040, and a bus system 1050. The processor 1010, the transmitter 1020, the receiver 1030, and the memory 1040 are connected by using the bus system 1050. The memory 1040 is configured to store an instruction. The processor 1010 is configured to execute the instruction stored in the memory 1040, so as to control the transmitter 1020 to transmit a signal or control the receiver 1030 to receive a signal. The transmitter 1020 and the receiver 1030 may be communications interfaces. Specifically, the transmitter 1020 may be an interface configured to receive data and/or the instruction, the receiver 1030 may be an interface configured to transmit the data and/or the instruction, and specific forms of the transmitter 1020 and the receiver 1030 are no longer described by using an example.

It should be understood that the apparatus 1000 may be specifically the apparatus for locating a network fault in the foregoing embodiments, and may be configured to execute steps and/or procedures corresponding to the apparatus for locating a network fault in the foregoing method embodiment. Optionally, the memory 1040 may include a read-only memory and a random access memory, and provide the instruction and the data to the processor. A part of the memory may further include a nonvolatile random access memory. For example, the memory may further store information about a device type. The processor 1010 may be configured to execute the instruction stored in the memory, and when the processor executes the instruction, the processor may perform the steps corresponding to the apparatus for locating a network fault in the foregoing method embodiment.

It should be understood that in this embodiment of the present invention, the processor may be a CPU, or the processor may be another general purpose processor, a DSP, an ASIC, an FPGA or another programmable logic device, a discrete gate or a transistor logic device, a discrete hardware component, or the like. The general purpose processor may be a microprocessor, or the processor may be any conventional processor or the like.

In an implementation process, steps in the foregoing methods can be implemented by using a hardware integrated logical circuit in the processor, or by using instructions in a form of software. The steps of the method disclosed with reference to the embodiments of the present invention may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, a register, or the like. The storage medium is located in the memory, and a processor executes instructions in the memory and completes the steps in the foregoing methods in combination with hardware of the processor. To avoid repetition, details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments of the present invention.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (English: read-only memory, ROM for short), a random access memory (random access memory, RAM for short), a magnetic disk, or an optical disc.

The foregoing descriptions are merely specific embodiments of the present invention, but are not intended to limit the protection scope of the present invention, which is defined by the appended claims.

**Claims**

1. A method for determining video quality, wherein the method comprises:

   obtaining (310) a network key performance indicator, KPI, parameter on a first network device of a plurality of network devices, wherein the network KPI parameter comprises a first round trip time, RTT, between a head-end device and the first network device for a video stream;
   determining (320) a Transmission Control Protocol, TCP, throughput of the first network device for the video stream based on the network KPI parameter on the first network device; and
   determining (330) video quality of the video stream on the first network device based on the TCP throughput and a played video amount of the video stream of the first network device; **characterised in that**:
   the determining TCP throughput of the first network device based on the network KPI parameter on the first network device comprises:

      determining a first packet loss rate of the first network device based on the first RTT; and
      determining the TCP throughput of the first network device based on the first RTT and the first packet loss rate;

wherein the determining a first packet loss rate of the first network device based on the first RTT comprises:

determining a first corrected RTT of the first network device based on the first RTT, wherein the first corrected RTT is obtained after the first RTT is corrected;

wherein the determining a first corrected RTT of the first network device based on the first RTT comprises obtaining a second RTT between the head-end device and a second network device, and a third RTT between the first network device and the second network device, and determining the first corrected RTT of the first network device based on the first RTT, the second RTT, and the third RTT; and

searching a preset mapping table based on the first corrected RTT, to obtain a first mapping entry corresponding to the first corrected RTT, and determining a packet loss rate in the first mapping entry as the first packet loss rate of the first network device, wherein each entry in the mapping table comprises a correspondence between an RTT and a packet loss rate; and

wherein if a video stream successively passes through the second network device and the first network device after being sent from the head-end device, the first corrected RTT of the first network device meets one of the following formulas:

if

$$RTT_{OB} \geq 2*(RTT_{OA} + RTT_{AB}), \quad RTT_{OB}^{'} = 1.5*(RTT_{OA} + RTT_{AB});$$

if

$$RTT_{OB} \geq 1.5*(RTT_{OA} + RTT_{AB}), \quad RTT_{OB}^{'} = 1.2*(RTT_{OA} + RTT_{AB});$$

and

if

$$RTT_{OB} \leq 0.5*(RTT_{OA} + RTT_{AB}), \quad RTT_{OB}^{'} = 0.75*(RTT_{OA} + RTT_{AB}),$$

wherein $RTT_{OB}^{'}$ represents the first corrected RTT, $RTT_{OB}$ represents the first RTT, $RTT_{OA}$ represents the second RTT, and $RTT_{AB}$ represents the third RTT.

2. The method according to claim 1, wherein the determining the TCP throughput of the first network device based on the first RTT and the first packet loss rate comprises:
determining the TCP throughput of the first network device based on the first corrected RTT and the first packet loss rate.

3. The method according to claim 1 or 2, wherein if a video stream successively passes through the first network device and the second network device after being sent from the head-end device, and a plurality of network devices exist between the head-end device and the first network device, the determining the first corrected RTT of the first network device based on the first RTT, the second RTT, and the third RTT comprises:

determining a second corrected RTT of the second network device based on the first RTT, the second RTT, and the third RTT, wherein the second corrected RTT is obtained after the second RTT is corrected; and
determining the first corrected RTT based on the second corrected RTT and the third RTT.

4. The method according to claim 3, wherein the first corrected RTT is determined according to the following formula:

$$RTT'_{OA} = RTT'_{OB} - RTT_{AB},$$

wherein $RTT'_{OA}$ represents the first corrected RTT, $RTT'_{OB}$ represents the second corrected RTT, and $RTT_{AB}$ represents the third RTT.

**5.** The method according to any one of claims 1 to 4, wherein the network KPI parameter further comprises a maximum bandwidth, MaxBW, of the first network device; and

the TCP throughput of the first network device is determined according to the following formula:

$$Throughput \leq Min\ (\frac{WS}{RTT'}, \frac{MSS}{RTT'} * \frac{1}{\sqrt{p'}},\ MaxBW),$$

wherein
*Throughput* represents the TCP throughput, *RTT'* represents the first corrected RTT, *p'* represents the first packet loss rate, *WS* represents a congestion window, and *MSS* represents a maximum packet length.

**6.** The method according to any one of claims 1 to 5, wherein the determining video quality on the first network device based on the TCP throughput and a played video amount of the first network device comprises:
determining a video mean opinion score, MOS-V, value on the first network device based on the TCP throughput and the played video amount of the first network device.

**7.** The method according to claim 6, wherein the method further comprises:
sending a notification message to a control center, wherein the notification message is used to notify the MOS-V value on the first network device, so that the control center determines a location of a video network fault based on a MOS-V value on each of the plurality of the network devices.

**8.** The method according to claim 6, wherein the method further comprises:
determining a location of a video network fault based on a MOS-V value on each of the plurality of the network devices.

**9.** An apparatus for determining video quality, wherein the apparatus comprises:

an obtaining unit, configured to obtain (310) a network key performance indicator KPI parameter on a first network device of a plurality of network devices, wherein the network KPI parameter comprises a first round trip time RTT between a head-end device and the first network device for a video stream;
a first determining unit, configured to determine (320) a Transmission Control Protocol TCP throughput of the first network device for the video stream based on the network KPI parameter on the first network device obtained by the obtaining unit; and
a second determining unit, configured to determine (330) video quality of the video stream on the first network device based on the TCP throughput and a played video amount of the video stream of the first network device determined by the first determining unit; and **characterised in that**:
the first determining unit is specifically configured to:

determine a first packet loss rate of the first network device based on the first RTT;
determine the TCP throughput of the first network device based on the first RTT and the first packet loss rate;
determine a first corrected RTT of the first network device based on the first RTT, wherein the first corrected RTT is obtained after the first RTT is corrected;
wherein the determining a first corrected RTT of the first network device based on the first RTT comprises obtaining a second RTT between the head-end device and a second network device, and a third RTT between the first network device and the second network device, and determining the first corrected RTT of the first network device based on the first RTT, the second RTT, and the third RTT; and
search a preset mapping table based on the first corrected RTT, to obtain a first mapping entry corresponding to the first corrected RTT, and determine a packet loss rate in the first mapping entry as the first packet loss rate of the first network device, wherein each entry in the mapping table comprises a correspondence between an RTT and a packet loss rate; and

wherein if a video stream successively passes through the second network device and the first network device after being sent from the head-end device, the first corrected RTT of the first network device meets one of the following formulas:

if

$$RTT_{OB} \geq 2 * (RTT_{OA} + RTT_{AB}), \quad RTT_{OB}^{'} = 1.5 * (RTT_{OA} + RTT_{AB});$$

if

$$RTT_{OB} \geq 1.5 * (RTT_{OA} + RTT_{AB}), \quad RTT_{OB}^{'} = 1.2 * (RTT_{OA} + RTT_{AB});$$

and
if

$$RTT_{OB} \leq 0.5 * (RTT_{OA} + RTT_{AB}), \quad RTT_{OB}^{'} = 0.75 * (RTT_{OA} + RTT_{AB}),$$

wherein $RTT_{OB}^{'}$ represents the first corrected RTT, $RTT_{OB}$ represents the first RTT, $RTT_{OA}$ represents the second RTT, and $RTT_{AB}$ represents the third RTT.

**Patentansprüche**

1.  Verfahren zum Bestimmen von Videoqualität, wobei das Verfahren umfasst:

    Erlangen (310) eines Parameters eines Netzwerk-Schlüsselleistungsindikators (KPI) an einer ersten Netzwerkvorrichtung einer Vielzahl von Netzwerkvorrichtungen, wobei der Netzwerk-KPI-Parameter eine erste Umlaufzeit (RTT) zwischen einer Kopfvorrichtung und der ersten Netzwerkvorrichtung für einen Videostream umfasst;
    Bestimmen (320) eines Transmission-Control-Protocol(TCP)-Durchsatzes der ersten Netzwerkvorrichtung für den Videostream basierend auf dem Netzwerk-KPI-Parameter an der ersten Netzwerkvorrichtung; und
    Bestimmen (330) der Videoqualität des Videostreams an der ersten Netzwerkvorrichtung basierend auf dem TCP-Durchsatz und einer abgespielten Videomenge des Videostreams der ersten Netzwerkvorrichtung; **dadurch gekennzeichnet, dass**:
    das Bestimmen des TCP-Durchsatzes der ersten Netzwerkvorrichtung basierend auf dem Netzwerk-KPI-Parameter an der ersten Netzwerkvorrichtung umfasst:

    Bestimmen einer ersten Paketverlustrate der ersten Netzwerkvorrichtung basierend auf der ersten RTT; und
    Bestimmen des TCP-Durchsatzes der ersten Netzwerkvorrichtung basierend auf der ersten RTT und der ersten Paketverlustrate;
    wobei das Bestimmen einer ersten Paketverlustrate der ersten Netzwerkvorrichtung basierend auf der ersten RTT umfasst:

    Bestimmen einer ersten korrigierten RTT der ersten Netzwerkvorrichtung basierend auf der ersten RTT, wobei die erste korrigierte RTT erlangt wird, nachdem die erste RTT korrigiert wurde;
    wobei das Bestimmen einer ersten korrigierten RTT der ersten Netzwerkvorrichtung basierend auf der ersten RTT Erlangen einer zweiten RTT zwischen der Kopfvorrichtung und einer zweiten Netzwerkvorrichtung und einer dritten RTT zwischen der ersten Netzwerkvorrichtung und der zweiten Netzwerkvorrichtung umfasst, und Bestimmen der ersten korrigierten RTT der ersten Netzwerkvorrichtung basierend auf der ersten RTT, der zweiten RTT und der dritten RTT; und
Durchsuchen einer voreingestellten Zuordnungstabelle basierend auf der ersten korrigierten RTT, um einen ersten Zuordnungseintrag zu erlangen, der der ersten korrigierten RTT entspricht, und Bestimmen einer Paketverlustrate in dem ersten Zuordnungseintrag als die erste Paketverlustrate der ersten Netzwerkvorrichtung, wobei jeder Eintrag in der Zuordnungstabelle eine Entsprechung zwischen einer RTT und einer Paketverlustrate umfasst; und
wobei, wenn ein Videostream nacheinander die zweite Netzwerkvorrichtung und die erste Netzwerkvorrichtung durchläuft, nachdem er von der Kopfvorrichtung gesendet wurde, die erste korrigierte RTT der ersten Netzwerkvorrichtung eine der folgenden Formeln erfüllt:
wenn

$$RTT_{OB} \geq 2 * (RTT_{OA} + RTT_{AB}), \ RTT'_{OB} = 1{,}5 * (RTT_{OA} + RTT_{AB});$$

wenn

$$RTT_{OB} \geq 1{,}5 * (RTT_{OA} + RTT_{AB}), \ RTT'_{OB} = 1{,}2 * (RTT_{OA} + RTT_{AB});$$

und
wenn

$$RTT_{OB} \leq 0{,}5 * (RTT_{OA} + RTT_{AB}), \quad RTT'_{OB} = 0{,}75 * (RTT_{OA} + RTT_{AB}),$$

wobei
$RTT'_{OB}$ für die erste korrigierte RTT, $RTT_{OB}$ für die erste RTT,
$RTT_{OA}$ für die zweite RTT und $RTT_{AB}$ für die dritte RTT steht.

2. Verfahren nach Anspruch 1, wobei das Bestimmen des TCP-Durchsatzes der ersten Netzwerkvorrichtung basierend auf der ersten RTT und der ersten Paketverlustrate umfasst:
Bestimmen des TCP-Durchsatzes der ersten Netzwerkvorrichtung basierend auf der ersten korrigierten RTT und der ersten Paketverlustrate.

3. Verfahren nach Anspruch 1 oder 2, wobei, wenn ein Videostream nacheinander die erste Netzwerkvorrichtung und die zweite Netzwerkvorrichtung durchläuft, nachdem er von der Kopfvorrichtung gesendet wurde, und eine Vielzahl von Netzwerkvorrichtungen zwischen der Kopfvorrichtung und der ersten Netzwerkvorrichtung vorhanden ist, das Bestimmen der ersten korrigierten RTT der ersten Netzwerkvorrichtung basierend auf der ersten RTT, der zweiten RTT und der dritten RTT umfasst:

Bestimmen einer zweiten korrigierten RTT der zweiten Netzwerkvorrichtung basierend auf der ersten RTT, der zweiten RTT und der dritten RTT, wobei die zweite korrigierte RTT erlangt wird, nachdem die zweite RTT korrigiert wurde; und
Bestimmen der ersten korrigierten RTT basierend auf der zweiten korrigierten RTT und der dritten RTT.

4. Verfahren nach Anspruch 3, wobei die erste korrigierte RTT gemäß der folgenden Formel bestimmt wird:

$$RTT'_{OA} = RTT'_{OB} - RTT_{AB},$$

wobei
$RTT'_{OA}$ für die erste korrigierte RTT, $RTT'_{OB}$ für die zweite korrigierte RTT und $RTT_{AB}$ für die dritte RTT steht.

5. Verfahren nach einem der Ansprüche 1 bis 4, wobei der Netzwerk-KPI-Parameter ferner eine maximale Bandbreite (MaxBW) der ersten Netzwerkvorrichtung umfasst; und

der TCP-Durchsatz der ersten Netzwerkvorrichtung gemäß der folgenden Formel bestimmt wird:

$$Durchsatz \leq Min \left( \frac{WS}{RTT'}, \frac{MSS}{RTT'} * \frac{1}{\sqrt{p'}}, MaxBW \right),$$

wobei

*wobei Durchsatz* für den TCP-Durchsatz, *RTT'* für die erste korrigierte RTT, *P'* für die erste Paketverlustrate, *WS* für ein Überlastungsfenster und *MSS* für eine maximale Paketlänge steht.

**6.** Verfahren nach einem der Ansprüche 1 bis 5, wobei das Bestimmen der Videoqualität an der ersten Netzwerkvorrichtung basierend auf dem TCP-Durchsatz und einer abgespielten Videomenge der ersten Netzwerkvorrichtung umfasst:
Bestimmen eines Video-Mean-Opinion-Score(MOS-V)-Werts an der ersten Netzwerkvorrichtung basierend auf dem TCP-Durchsatz und der abgespielten Videomenge der ersten Netzwerkvorrichtung.

**7.** Verfahren nach Anspruch 6, wobei das Verfahren ferner umfasst:
Senden einer Mitteilungsnachricht an ein Kontrollzentrum, wobei die Mitteilungsnachricht verwendet wird, um den MOS-V-Wert an der ersten Netzwerkvorrichtung mitzuteilen, sodass das Kontrollzentrum eine Stelle eines Videonetzwerkfehlers basierend auf einem MOS-V-Wert an jeder der Vielzahl der Netzwerkvorrichtungen bestimmt.

**8.** Verfahren nach Anspruch 6, wobei das Verfahren ferner umfasst:
Bestimmen einer Stelle eines Videonetzwerkfehlers basierend auf einem MOS-V-Wert an jeder der Vielzahl von Netzwerkvorrichtungen.

**9.** Vorrichtung zum Bestimmen von Videoqualität, wobei die Vorrichtung umfasst:

eine Erlangungseinheit, die zum Erlangen (310) eines Parameters eines Netzwerk-Schlüsselleistungsindikators (KPI) an einer ersten Netzwerkvorrichtung einer Vielzahl von Netzwerkvorrichtungen konfiguriert ist, wobei der Netzwerk-KPI-Parameter eine erste Umlaufzeit (RTT) zwischen einer Kopfvorrichtung und der ersten Netzwerkvorrichtung für einen Videostream umfasst;
eine erste Bestimmungseinheit, die zum Bestimmen (320) eines Transmission-Control-Protocol(TCP)-Durchsatzes der ersten Netzwerkvorrichtung für den Videostream basierend auf dem Netzwerk-KPI-Parameter an der ersten Netzwerkvorrichtung, der durch die Erlangungseinheit erlangt wird, konfiguriert ist; und eine zweite Bestimmungseinheit, die zum Bestimmen (330) der Videoqualität des Videostreams an der ersten Netzwerkvorrichtung basierend auf dem TCP-Durchsatz und einer abgespielten Videomenge des Videostreams der ersten Netzwerkvorrichtung, die durch die erste Bestimmungseinheit bestimmt werden, konfiguriert ist; und **dadurch gekennzeichnet, dass**:
wobei die erste Bestimmungseinheit spezifisch konfiguriert ist zum:

Bestimmen einer ersten Paketverlustrate der ersten Netzwerkvorrichtung basierend auf der ersten RTT;
Bestimmen des TCP-Durchsatzes der ersten Netzwerkvorrichtung basierend auf der ersten RTT und der ersten Paketverlustrate;
Bestimmen einer ersten korrigierten RTT der ersten Netzwerkvorrichtung basierend auf der ersten RTT, wobei die erste korrigierte RTT erlangt wird, nachdem die erste RTT korrigiert wurde;
wobei das Bestimmen einer ersten korrigierten RTT der ersten Netzwerkvorrichtung basierend auf der ersten RTT Erlangen einer zweiten RTT zwischen der Kopfvorrichtung und einer zweiten Netzwerkvorrichtung und einer dritten RTT zwischen der ersten Netzwerkvorrichtung und der zweiten Netzwerkvorrichtung umfasst, und Bestimmen der ersten korrigierten RTT der ersten Netzwerkvorrichtung basierend auf der ersten RTT, der zweiten RTT und der dritten RTT; und
Durchsuchen einer voreingestellten Zuordnungstabelle basierend auf der ersten korrigierten RTT, um einen ersten Zuordnungseintrag zu erlangen, der der ersten korrigierten RTT entspricht, und Bestimmen einer Paketverlustrate in dem ersten Zuordnungseintrag als die erste Paketverlustrate der ersten Netzwerkvorrichtung, wobei jeder Eintrag in der Zuordnungstabelle eine Entsprechung zwischen einer RTT und einer Paketverlustrate umfasst; und
wobei, wenn ein Videostream nacheinander die zweite Netzwerkvorrichtung und die erste Netzwerkvorrichtung durchläuft, nachdem er von der Kopfvorrichtung gesendet wurde, die erste korrigierte RTT der ersten Netzwerkvorrichtung eine der folgenden Formeln erfüllt:
wenn

$$RTT_{OB} \geq 2 * (RTT_{OA} + RTT_{AB}), \quad RTT'_{OB} = 1,5 * (RTT_{OA} + RTT_{AB});$$

wenn

$$RTT_{OB} \geq 1,5 * (RTT_{OA} + RTT_{AB}), \quad RTT'_{OB} = 1,2 * (RTT_{OA} + RTT_{AB});$$

und
wenn

$$RTT_{OB} \leq 0,5 * (RTT_{OA} + RTT_{AB}), \quad RTT'_{OB} = 0,75 * (RTT_{OA} + RTT_{AB}),$$

wobei
$RTT'_{OB}$ für die erste korrigierte RTT, $\boldsymbol{RTT_{OB}}$ für die erste RTT,
$RTT_{OA}$ für die zweite RTT und $\boldsymbol{RTT_{AB}}$ für die dritte RTT steht.

## Revendications

1. Procédé permettant de déterminer la qualité vidéo, dans lequel le procédé comprend :

   l'obtention (310) d'un paramètre d'indicateur de performance de clé de réseau, KPI, sur un premier dispositif de réseau d'une pluralité de dispositifs de réseau, dans lequel le paramètre KPI de réseau comprend un premier temps d'aller-retour, RTT, entre un dispositif de tête de réseau et le premier dispositif de réseau pour un flux vidéo ;
   la détermination (320) d'un débit de protocole de commande de transmission, TCP, du premier dispositif de réseau pour le flux vidéo sur la base du paramètre KPI de réseau sur le premier dispositif de réseau ; et
   la détermination (330) de la qualité vidéo du flux vidéo sur le premier dispositif de réseau sur la base du débit TCP et d'une quantité de vidéo lue du flux vidéo du premier dispositif de réseau ; **caractérisé en ce que** :
   la détermination du débit TCP du premier dispositif de réseau sur la base du paramètre KPI de réseau sur le premier dispositif de réseau comprend :

   la détermination d'un premier taux de perte de paquets du premier dispositif de réseau sur la base du premier RTT ; et
   la détermination du débit TCP du premier dispositif de réseau sur la base du premier RTT et du premier taux de perte de paquets ;
   dans lequel la détermination d'un premier taux de perte de paquets du premier dispositif de réseau sur la base du premier RTT comprend :

   la détermination d'un premier RTT corrigé du premier dispositif de réseau sur la base du premier RTT, dans lequel le premier RTT corrigé est obtenu après que le premier RTT a été corrigé ;
   dans lequel la détermination d'un premier RTT corrigé du premier dispositif de réseau sur la base du premier RTT comprend l'obtention d'un deuxième RTT entre le dispositif de tête de réseau et un second dispositif de réseau, et d'un troisième RTT entre le premier dispositif de réseau et le second dispositif de réseau, et la détermination du premier RTT corrigé du premier dispositif de réseau sur la base du premier RTT, du deuxième RTT et du troisième RTT ; et
   la recherche d'une table de mappage prédéfinie sur la base du premier RTT corrigé, pour obtenir une première entrée de mappage correspondant au premier RTT corrigé, et la détermination d'un taux de perte de paquets dans la première entrée de mappage en tant que premier taux de perte de paquets du premier dispositif de réseau, dans lequel chaque entrée dans la table de mappage comprend une correspondance entre un RTT et un taux de perte de paquets ; et
   dans lequel si un flux vidéo passe successivement par le second dispositif de réseau et le premier dispositif de réseau après avoir été envoyé depuis le dispositif de tête de réseau, le premier RTT corrigé du premier dispositif de réseau répond à l'une des formules suivantes :
   si

$$RTT_{OB} \geq 2 * (RTT_{OA} + RTT_{AB}), \quad RTT'_{OB} = 1,5 * (RTT_{OA} + RTT_{AB});$$

si

$$RTT_{OB} \geq 1,5 * (RTT_{OA} + RTT_{AB}), \quad RTT'_{OB} = 1,2 * (RTT_{OA} + RTT_{AB});$$

et si

$$RTT_{OB} \leq 0,5 * (RTT_{OA} + RTT_{AB}), \quad RTT'_{OB} = 0,75 * (RTT_{OA} + RTT_{AB}),$$

dans lesquelles
$RTT'_{OB}$ représente le premier RTT corrigé, $\mathbf{RTT_{OB}}$ représente le premier RTT, $\mathbf{RTT_{OA}}$ représente le deuxième RTT et $\mathbf{RTT_{AB}}$ représente le troisième RTT.

2. Procédé selon la revendication 1, dans lequel la détermination du débit TCP du premier dispositif de réseau sur la base du premier RTT et du premier taux de perte de paquets comprend :
la détermination du débit TCP du premier dispositif de réseau sur la base du premier RTT corrigé et du premier taux de perte de paquets.

3. Procédé selon la revendication 1 ou 2, dans lequel si un flux vidéo passe successivement par le premier dispositif de réseau et le second dispositif de réseau après avoir été envoyé depuis le dispositif de tête de réseau, et qu'il existe une pluralité de dispositifs de réseau entre le dispositif de tête de réseau et le premier dispositif de réseau, la détermination du premier RTT corrigé du premier dispositif de réseau sur la base du premier RTT, du deuxième RTT et du troisième RTT comprend :

la détermination d'un second RTT corrigé du second dispositif de réseau sur la base du premier RTT, du deuxième RTT et du troisième RTT, dans lequel le second RTT corrigé est obtenu après que le deuxième RTT a été corrigé ; et
la détermination du premier RTT corrigé sur la base du second RTT corrigé et du troisième RTT.

4. Procédé selon la revendication 3, dans lequel le premier RTT corrigé est déterminé selon la formule suivante :

$$RTT'_{OA} = RTT'_{OB} - RTT_{AB},$$

dans laquelle
$\mathbf{RTT'_{OA}}$ représente le premier RTT corrigé, $\mathbf{RTT'_{OB}}$ représente le second RTT corrigé et $\mathbf{RTT_{AB}}$ représente le troisième RTT.

5. Procédé selon l'une quelconque des revendications 1 à 4, dans lequel le paramètre KPI de réseau comprend en outre une bande passante maximale, MaxBW, du premier dispositif de réseau ; et le débit TCP du premier dispositif de réseau est déterminé selon la formule suivante :

$$Débit \leq Min\left(\frac{WS}{RTT'}, \frac{MSS}{RTT'} * \frac{1}{\sqrt{p'}}, MaxBW\right),$$

dans laquelle
*Débit* représente le débit TCP, $RTT'$ représente le premier RTT corrigé, $P'$ représente le premier taux de perte de paquets, $WS$ représente une fenêtre de congestion et $MSS$ représente une longueur de paquet maximale.

6. Procédé selon l'une quelconque des revendications 1 à 5, dans lequel la détermination de la qualité vidéo sur le premier dispositif de réseau sur la base du débit TCP et d'une quantité de vidéo lue du premier dispositif de réseau comprend :

la détermination d'une valeur de score d'opinion moyenne vidéo, MOS-V, sur le premier dispositif de réseau sur la base du débit TCP et de la quantité de vidéo lue du premier dispositif de réseau.

7. Procédé selon la revendication 6, dans lequel le procédé comprend en outre :
l'envoi d'un message de notification à un centre de contrôle, dans lequel le message de notification est utilisé pour notifier la valeur MOS-V sur le premier dispositif de réseau, de sorte que le centre de contrôle détermine un emplacement d'un défaut de réseau vidéo sur la base d'une valeur MOS-V sur chacun de la pluralité des dispositifs de réseau.

8. Procédé selon la revendication 6, dans lequel le procédé comprend en outre :
la détermination d'un emplacement d'un défaut de réseau vidéo sur la base d'une valeur MOS-V sur chacun de la pluralité des dispositifs de réseau.

9. Appareil permettant de déterminer la qualité vidéo, dans lequel l'appareil comprend :

une unité d'obtention, configurée pour obtenir (310) un paramètre d'indicateur de performance de clé de réseau, KPI, sur un premier dispositif de réseau d'une pluralité de dispositifs de réseau, dans lequel le paramètre KPI de réseau comprend un premier temps d'aller-retour, RTT, entre un dispositif de tête de réseau et le premier dispositif de réseau pour un flux vidéo ;
une première unité de détermination, configurée pour déterminer (320) un débit de protocole de commande de transmission, TCP, du premier dispositif de réseau pour le flux vidéo sur la base du paramètre KPI de réseau sur le premier dispositif de réseau obtenu par l'unité d'obtention ; et
une seconde unité de détermination, configurée pour déterminer (330) la qualité vidéo du flux vidéo sur le premier dispositif de réseau sur la base du débit TCP et d'une quantité de vidéo lue du flux vidéo du premier dispositif de réseau déterminée par la première unité de détermination ; et **caractérisé en ce que** :
la première unité de détermination est spécifiquement configurée pour :

déterminer un premier taux de perte de paquets du premier dispositif de réseau sur la base du premier RTT ;
déterminer le débit TCP du premier dispositif de réseau sur la base du premier RTT et du premier taux de perte de paquets ;
déterminer un premier RTT corrigé du premier dispositif de réseau sur la base du premier RTT, dans lequel le premier RTT corrigé est obtenu après que le premier RTT a été corrigé ;
dans lequel la détermination d'un premier RTT corrigé du premier dispositif de réseau sur la base du premier RTT comprend l'obtention d'un deuxième RTT entre le dispositif de tête de réseau et un second dispositif de réseau, et d'un troisième RTT entre le premier dispositif de réseau et le second dispositif de réseau, et la détermination du premier RTT corrigé du premier dispositif de réseau sur la base du premier RTT, du deuxième RTT et du troisième RTT ; et
rechercher une table de mappage prédéfinie sur la base du premier RTT corrigé, pour obtenir une première entrée de mappage correspondant au premier RTT corrigé, et déterminer un taux de perte de paquets dans la première entrée de mappage en tant que premier taux de perte de paquets du premier dispositif de réseau, dans lequel chaque entrée dans la table de mappage comprend une correspondance entre un RTT et un taux de perte de paquets ; et
dans lequel si un flux vidéo passe successivement par le second dispositif de réseau et le premier dispositif de réseau après avoir été envoyé depuis le dispositif de tête de réseau, le premier RTT corrigé du premier dispositif de réseau répond à l'une des formules suivantes :
si

$$RTT_{OB} \geq 2 * (RTT_{OA} + RTT_{AB}),\ RTT'_{OB} = 1{,}5 * (RTT_{OA} + RTT_{AB})\ ;$$

si

$$RTT_{OB} \geq 1{,}5 * (RTT_{OA} + RTT_{AB}),\ RTT'_{OB} = 1{,}2 * (RTT_{OA} + RTT_{AB})\ ;$$

et
si

$$RTT_{OB} \leq 0{,}5 * (RTT_{OA} + RTT_{AB}), \quad RTT'_{OB} = 0{,}75 * (RTT_{OA} + RTT_{AB}),$$

dans lesquelles

$RTT'_{OB}$ représente le premier RTT corrigé, $\mathbf{RTT_{OB}}$ représente le premier RTT, $\mathbf{RTT_{OA}}$ représente le deuxième RTT et $\mathbf{RTT_{AB}}$ représente le troisième RTT.

$$RTT_{OB} \leq 0{,}5 * (RTT_{OA} + RTT_{AB}), \quad RTT'_{OB} = 0{,}75 * (RTT_{OA} + RTT_{AB}),$$

Video network system 100

| Head-end device 110 | → | Network device 120 | → | Network device 130 | → | Terminal device 140 |

| Apparatus 150 for determining video quality | Apparatus 160 for determining video quality |

FIG. 1

Video network system 200

| Head-end device 210 | → | Network device 220 | → | Network device 230 | → | Terminal device 240 |

Apparatus 250 for determining video quality

FIG. 2

300

Obtain a network key performance indicator KPI parameter on a first network device of a plurality of network devices, where the network KPI parameter includes a first round trip time RTT between a head-end device and the first network device
310

Determine a Transmission Control Protocol TCP throughput of the first network device based on the network KPI parameter on the first network device
320

Determine video quality on the first network device based on the TCP throughput and a played video amount of the first network device
330

FIG. 3

FIG. 4

500

Obtain a first Transmission Control Protocol TCP throughput, on a first network device, of a first video stream sent by a head-end device, and a second TCP throughput, on a second network device, of a second video stream sent by the head-end device, where content of the first video stream is the same as that of the second video stream, a destination Internet Protocol IP address of the first video stream is an IP address of the first network device, a destination IP address of the second video stream is an IP address of the second network device, and the second video stream is sent to the second network device through the first network device

510

Determine a location of a video network fault based on the TCP throughput of the first video stream on the first network device and the TCP throughput of the second video stream on the second network device

520

FIG. 5

FIG. 6

Apparatus 700

Obtaining unit 710

First determining unit 720

Second determining unit 730

FIG. 7

Apparatus 800

Obtaining unit 810

Determining unit 820

FIG. 8

Apparatus 900

Processor
910

Transmitter
920

950

Receiver 930

Memory 940

FIG. 9

Apparatus 1000

Processor
1010

Transmitter
1020

1050

Receiver
1030

Memory
1040

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104113788 A

- CN 103188236 A

**Non-patent literature cited in the description**

- An objective multi-layer QoE Evaluation for TCP video streaming. **YU PENG et al.** 2015 IFIP/IEEE INTERNATIONAL SYMPOSIUM ON INTEGRATED NETWORK MANAGEMENT (IM). IEEE, 11 May 2015, 1255-1260

- Measurement of loss pairs in network paths. **EDMOND W W CHAN et al.** PROCEEDINGS OF THE 10TH ANNUAL CONFERENCE ON INTERNET MEASUREMENT, IMC '10. ACM PRESS, 01 November 2010, 88-101